# EUROPEAN PATENT APPLICATION

(11) **EP 4 671 313 A1**
(43) Date of publication of application: **31.12.2025**
(21) Application number: 25170751.9
(22) Date of filing: 15.04.2025
(51) Int. Cl.: C08J 3/12, C08K 13/04

(54) **SPHERICAL COMPOSITE PHENOLIC RESIN, PREPARATION METHOD THEREFOR AND USE THEREOF**

(30) Priority: 28.06.2024 CN 202410860903
(71) Applicant: Xunyang Advsorbent New Materials Technology Co., Ltd., Ankang, Shaanxi 725700 (CN); Shaanxi Huaherbal Biotechnology Co., Ltd., Ankang, Shaanxi 725700 (CN); Shaanxi Advsorbent New Materials Technology Co., Ltd., Xi'An, Shaanxi 710075 (CN)
(72) Inventor: DENG, Maosheng, ANKANG, 725700 (CN); ZHANG, Liqin, ANKANG, 725700 (CN); QIN, Xiulan, ANKANG, 725700 (CN); YUAN, Longhai, ANKANG, 725700 (CN)
(74) Representative: Lavoix

(57) **Abstract**

The present invention belongs to the technical field of composite materials, and in particular relates to a spherical composite phenolic resin as well as a preparation method and use thereof. The method for preparing the spherical composite phenolic resin comprises the following steps: mixing a phenolic resin, a solvent, a composite additive and a curing agent, dispersing, and obtaining a dispersed phase; the composite additive comprises at least one of carbon nanotubes, modified carbon nanotubes, graphene and conductive carbon black; mixing an oil-based dispersion medium and a surfactant to obtain a dispersion medium A; mixing deionized water, a dispersant, and a surfactant to obtain a dispersion medium B; preparing the dispersed phase into spherical droplets, wherein the uniformity of the spherical droplets is 1.1 or less; allowing the spherical droplets to enter the dispersion medium A for curing reaction, and then entering the dispersion medium B, and performing a curing reaction under stirring to obtain the spherical composite phenolic resin, wherein the uniformity of the spherical composite phenolic resin is 1.3 or less. The prepared spherical composite phenolic resin is uniform in particle size, high in yield, stable in overall performance and more beneficial to practical application.

## Description

### TECHNICAL FIELD

The present invention belongs to the technical field of composite materials, and in particular relates to a spherical composite phenolic resin, a preparation method therefor and use thereof.

### BACKGROUND

Carbon nanotubes are a one-dimensional quantum material with a special structure. According to the number of graphite layers, carbon nanotubes can be divided into single-walled carbon nanotubes and multi-walled carbon nanotubes. Carbon nanotubes are seamless tubular structures formed by curling single or multi-layer graphite planes. The C-C bond in the graphite plane is one of the strongest and most stable chemical bonds in nature, which can make carbon nanotubes have excellent mechanical properties, thermal stability, and special electrical properties. Therefore, the use of carbon nanotubes to prepare nanocomposites can not only enhance the mechanical properties, but also give the nanocomposites other excellent properties. However, carbon nanotubes are easy to agglomerate and difficult to disperse, which makes it impossible to exert the unique properties of carbon nanotubes when directly using them to modify polymers to prepare composite materials.

Phenolic resin has many excellent properties, such as high mechanical strength, excellent electrical insulation and good dimensional stability, and has been widely used in many fields such as insulating materials, friction materials, coatings and photoresists. However, its poor electrical conductivity still limits its application areas, so its electrical conductivity can be enhanced and improved by carbon nanotube conductive materials. By combining the advantages of carbon nanotubes and phenolic resin, the conductivity of the resin base can be improved, so that it can be applied to fields such as battery negative electrode materials.

In the prior art, the commonly used methods for preparing carbon nanotube composite phenolic resin microspheres include emulsion method, microfluidic droplet, spray drying, etc. For example, an existing method for preparing carbon nanotube composite phenolic resin microspheres by emulsion method discloses that an organic solvent, sodium dodecyl sulfate and composite carbon material are first mixed, dispersed, mixed with phenolic resin, and after the microspheres are formed, an acidic substance is added to obtain a finished product. An existing method for preparing carbon nanotube microspheres by microfluidic droplet technology discloses that surface functionalized carbon nanotubes are first made into a dispersed phase solution, and then the dispersed solution is injected into the mobile phase at a certain rate, and then heated and cured to obtain carbon nanotube microspheres. An existing method for preparing carbon nanotube microspheres by spray drying method discloses that mixing carbon nanotubes with solvent to form a dispersion of a certain uniformity, and then passing through a spray dryer to obtain carbon nanotube microspheres by spray drying. However, due to the agglomeration of carbon nanotubes, the particle size of the microspheres prepared by the above method is uneven and uncontrollable, resulting in unstable material properties, and the preparation method is relatively cumbersome and has low industrial feasibility. There are also an existing method discloses that the modified carbon nanotubes are first connected to a phenolic resin precursor, cured, crushed, and then used; the crushing uses mechanical crushing, such as air flow crushing; but the resulting particles are amorphous, not spherical particles, and the material properties are poor.

### SUMMARY OF THE INVENTION

Therefore, the technical problem to be solved by the present invention is to overcome the defects of the carbon nanotube composite resin materials prepared in the prior art, such as amorphous particles or spherical materials with different particle sizes, so as to provide a spherical composite phenolic resin, a preparation method therefor and use thereof.

To this end, the present invention provides the following technical solutions.

The present invention provides a method for preparing a spherical composite phenolic resin, characterized in that the method comprises the following steps: S1: mixing a phenolic resin, a solvent, a composite additive and a curing agent, dispersing, and obtaining a dispersed phase; wherein, the composite additive comprises at least one of carbon nanotubes, modified carbon nanotubes, graphene and conductive carbon black; S2: mixing an oil-based dispersion medium and a surfactant to obtain a dispersion medium A; mixing deionized water, a dispersant, and a surfactant to obtain a dispersion medium B; S3: preparing the dispersed phase into spherical droplets, wherein the uniformity of the spherical droplets is 1.1 or less; S4: allowing the spherical droplets to enter the dispersion medium A for curing reaction to obtain a spherical intermediate product; S5: adding the spherical intermediate product into the dispersion medium B, and performing a curing reaction under stirring to obtain the spherical composite phenolic resin, wherein the uniformity of the spherical composite phenolic resin is 1.3 or less.

Optionally, in the dispersed phase, the mass ratio of phenolic resin, solvent, composite additive and curing agent is (100-500) : (100-500) : (0.5-50) : (1-10).

Optionally, in the dispersion medium A, the mass ratio of the oil-based dispersion medium to the surfactant is (100-2000) : (1-50).

Optionally, in the dispersion medium B, the mass ratio of deionized water, dispersant, and surfactant is (100-3000) : (1-10) : (1-50).

Optionally, in step S5, the mass ratio of the added spherical intermediate product to the deionized water, dispersant, and surfactant in the dispersion medium B is (100-500) : (100-3000) : (1-10) : (1-50).

Preferably, the uniformity of the spherical composite phenolic resin is 1.2 or less.

Optionally, in the step S1, the temperature of the dispersing is 40°C to 70°C and the time of the dispersing is 0.5h to 3h.

Optionally, step S3 comprises feeding the dispersed phase into a molding device at a flow rate of 0.1 L/min to 5000 L/min at a temperature of 50°C to 90°C to shape a spherical droplet; an injection plate is installed at an outlet of the molding device, and the injection plate is provided with evenly distributed discharge holes; the aperture size of the discharge holes ranges from 0.1 mm to 1 mm, and the spacing between adjacent discharge holes ranges from 1 mm to 4 mm, and an exciter is also installed inside the molding device. Typically, but not limitedly, the flow rate can be controlled by pumping in a pump.

Preferably, feeding the dispersed phase into the molding device at a flow rate of 50 L/min to 100 L/min at a temperature of 50°C to 90°C to shape a spherical droplet.

Optionally, the particle size of the spherical droplets is controlled by the flow rate of the dispersed phase and the size of the discharge hole.

Optionally, in step S4, the temperature of the curing reaction is 100°C to 150°C and the time of the curing reaction is 2h to 5h; preferably, the temperature of the curing reaction is 120°C to 130°C.

Optionally, in step S5, the temperature of the curing reaction is 100°C to 150°C, the pressure of the curing reaction is 0.1 MPa to 0.5 MPa, and the time of the curing reaction is 2h to 8h; preferably, the temperature of the curing reaction is 110°C to 130°C.

Optionally, in step S5, the stirring rate is 400 r/min to 1600 r/min; preferably, the stirring rate is 400 r/min to 800 r/min.

Preferably, in step S4, the spherical droplets undergoing the curing reaction are in a non-stationary state, so as to avoid adhesion between the spherical droplets during the curing reaction.

In the preparation method provided by the present invention, in step S4, the solvent in the droplets is evaporated, and slowly cured under the action of the curing agent, and will eventually reach a non-sticky state, and is kept warm and cured in a container for a period of time. The container used can be a granulation kettle.

Optionally, between step S4 and step S5, further comprises a step of washing the spherical intermediate product, and the washing step comprises degreasing; preferably, the agent used for degreasing comprises sodium stearate. The oil remaining on the surface of the spherical intermediate product and inside the pores will be removed during degreasing.

Optionally, the solvent comprises at least one of methanol, ethanol and n-butanol.

Optionally, the curing agent comprises at least one of aniline, urotropin and paraformaldehyde.

Optionally, the oil-based dispersion medium comprises at least one of light normal liquid alkanes, turbine oil, dimethyl silicone oil, and liquid paraffin.

Optionally, the surfactant comprises at least one of polytetrafluoroethylene, sodium dodecyl sulfonate, and sodium dodecyl sulfate.

Optionally, the dispersant comprises at least one of polyvinyl alcohol, cellulose, gelatin, and carboxymethyl cellulose.

Optionally, the carbon nanotube has a length of 1 µm to 15 µm and a tube diameter of 1 nm to 10 nm.

Optionally, the modified carbon nanotube comprises at least one of amino-modified carbon nanotubes, carboxyl-modified carbon nanotubes, and hydroxyl-modified carbon nanotubes.

The present invention provides a spherical composite phenolic resin obtained by the above-mentioned method.

Optionally, the spherical composite phenolic resin has a particle size of 0.005 mm to 2 mm; preferably, the spherical composite phenolic resin has a particle size of 0.005 mm to 0.8 mm.

The present invention also provides use of the spherical composite phenolic resin in battery negative electrode materials.

The beneficial effects of the present invention are:
The present invention provides a method for preparing a spherical composite phenolic resin, the method comprises the following steps: S1: mixing a phenolic resin, a solvent, a composite additive and a curing agent, dispersing, and obtaining a dispersed phase; wherein, the composite additive comprises at least one of carbon nanotubes, modified carbon nanotubes, graphene and conductive carbon black; S2: mixing an oil-based dispersion medium and a surfactant to obtain a dispersion medium A; mixing deionized water, a dispersant, and a surfactant to obtain a dispersion medium B; S3: preparing the dispersed phase into spherical droplets, wherein the uniformity of the spherical droplets is 1.1 or less; S4: allowing the spherical droplets to enter the dispersion medium A for curing reaction to obtain a spherical intermediate product; S5: adding the spherical intermediate product into the dispersion medium B, and performing a curing reaction under stirring to obtain the spherical composite phenolic resin, wherein the uniformity of the spherical composite phenolic resin is 1.3 or less. The preparation method can prepare a spherical composite phenolic resin with uniform particle size, high yield, stable overall performance, and more advantageous for practical application. The entire preparation process divides curing into multiple stages. First, spherical droplets with uniform but larger size are prepared. Then, spherical composite phenolic resins with uniform and smaller size are prepared through shear force generated by stirring in a specific dispersion medium and further curing reaction. The particle size distribution range of the final product is successfully controlled, making its performance more stable.

The present invention provides a method for preparing a spherical composite phenolic resin. The method controls the particle size of the spherical droplets by adjusting the flow rate of the dispersed phase fed into a molding device and the size of the discharge holes on an injection plate installed on the molding device, that is, controls the particle size of the final spherical composite phenolic resin. The method is easy to operate and can obtain spherical composite phenolic resins of different sizes and uniform particle sizes as required.

### DESCRIPTION OF THE DRAWINGS

In order to illustrate the technical solutions in the specific embodiments of the present application or in the prior art more clearly, the drawings to be used in the description of the specific embodiments or the prior art will be briefly introduced below. Obviously, the drawings in the following description show some of the embodiments of the present application, and those of ordinary skill in the art may still obtain other drawings from these drawings without creative efforts.
FIG. 1 is a schematic flow diagram of a preparation method according to an example of the present invention;
FIG. 2 is a photograph of the final product obtained in Example 1 of the present invention magnified 300 times under a microscope;
FIG. 3 is a photograph of the final product obtained in Example 7 of the present invention magnified 200 times under a microscope;
FIG. 4 is a photograph of the final product obtained in Example 1 of the present invention magnified 200 times under a scanning electron microscope;
FIG. 5 is a photograph of the final product obtained in Example 7 of the present invention magnified 200 times under a scanning electron microscope;
FIG. 6 is a photograph of the final product obtained in Example 8 of the present invention magnified 100 times under a microscope.

### DETAILED DESCRIPTION

The following examples are provided for a better understanding of the present application, are not limited to the best implementations, and do not constitute a limitation on the content or scope of protection of the present application. Any product identical or similar to the present application, derived by anyone under the inspiration of the present application or by combining the present application with other features of the prior art, falls within the scope of protection of the present application.

Where specific experimental steps or conditions are not indicated in the examples, the operations or conditions of conventional experimental steps described in the documents in the present art can be followed. The reagents or instruments used without the manufacturer indicated are conventional reagent products that are commercially available.

### Experimental drugs

Dimethyl silicone oil: Shandong Longhui Chemical.

Polytetrafluoroethylene emulsion: Quzhou Baimao Technology Co., Ltd., molecular weight: 30,000-50,000.

Carbon nanotubes: length is 1µm to 15 µm and diameter is 1 nm to 10 nm.

Polyvinyl alcohol: Macklin, molecular weight 9000 to 10000.

### Example 1

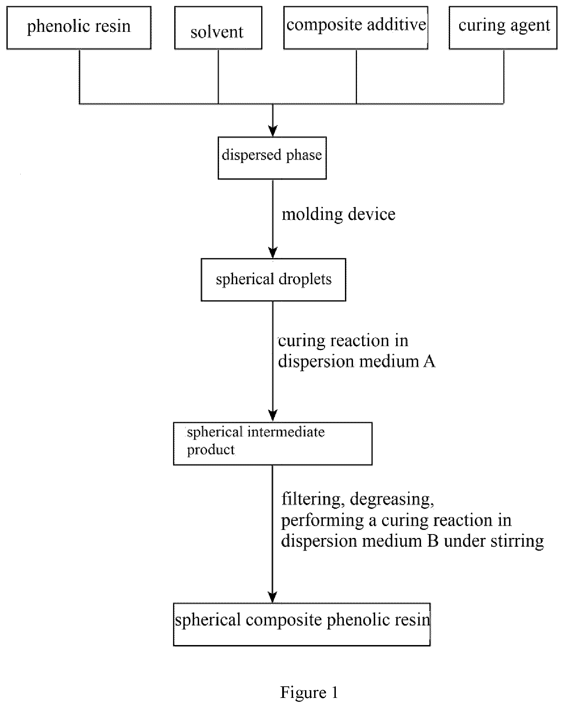

This example provides a spherical composite phenolic resin and a preparation method thereof, comprising the following steps, and the schematic flow chart is shown in FIG. 1; wherein steps (3) to (4) are performed in the preparation device disclosed in patent document CN116282017A:
(1) 100 g of phenolic resin, 200 g of ethanol solvent, 1 g of hydroxyl-modified carbon nanotubes, and 6.2 g of urotropin were mixed, then heated to 60°C and stirred for 2 h to obtain a dispersed phase.
   The method for preparing hydroxyl-modified carbon nanotubes was as follows: 10g of carbon nanotubes were dissolved in 200g of methanol, stirred at room temperature for 5h, and low molecular weight cracking products adhering to the carbon nanotubes were washed away. Then 25g of sodium dodecyl sulfonate, 15g of concentrated sulfuric acid and 5g of ammonium persulfate were added to a three-necked flask together with the carbon nanotubes, and ultrasonicated at 40°C for 2h to fully disperse the carbon nanotubes. The reactant after ultrasonic treatment were dehydrated under reduced pressure for 2h, and then placed at 80°C for vacuum drying for 8h to obtain hydroxyl-modified carbon nanotubes.
(2) 1000 g of dimethyl silicone oil, 10 g of polytetrafluoroethylene and 10 g of sodium dodecyl sulfonate were mixed and stirred evenly to obtain a dispersion medium A1, which was placed in a granulation kettle for standby use; 2000 g of deionized water, 10 g of PVA (polyvinyl alcohol) and 20 g of sodium dodecyl sulfate were mixed to obtain a dispersion medium B1, which was placed in a high-pressure autoclave for standby use.
(3) a molding device equipped with an injection plate and an exciter at the outlet was used, wherein the radial dimension of the discharge hole was 0.3 mm and the spacing between adjacent discharge holes was 2 mm, the dispersed phase obtained in (1) was pumped into the molding device at a flow rate of 50 L/min, and the dispersed phase was dispersed into spherical droplets with a uniform particle size of 0.1 to 0.3 mm at 80°C.
(4) the dispersion medium A1 was heated to 120°C, the spherical droplets obtained in (3) were sprayed into a granulation kettle filled with the dispersion medium A1, and the spherical droplets were allowed to move from top to bottom. During the falling process, the ethanol solvent in the droplets was evaporated, and the droplets were slowly cured under the action of the curing agent, tiny pores were left in the spheres, and finally a non-sticky state was achieved. The granulation kettle was then kept warm for 2 hours to obtain a spherical intermediate product 1, which is then centrifuged for solid-liquid separation.
(5) the spherical intermediate product 1 obtained in (4) was washed with a sodium stearate solution to remove any residual oil on the surface and inside the pores.
(6) 100 g of the washed spherical intermediate product 1 was added to the dispersion medium B1, the stirring rate was set to 500 r/min. The reaction was carried out at 0.3 MPa and 120°C for 5 h, and then filtered and dried to obtain the spherical composite phenolic resin.

### Example 2

This example provides a spherical composite phenolic resin and a preparation method therefor, which is different from Example 1 only in that, in step (3), the dispersed phase obtained in (1) is pumped into a resin granulator at a flow rate of 55 L/min to be dispersed into spherical droplets with a uniform particle size of 0.3 mm to 0.5 mm.

### Example 3

This example provides a spherical composite phenolic resin and a preparation method therefor, which is different from Example 1 only in that, in step (3), the dispersed phase obtained in (1) is pumped into a resin granulator at a flow rate of 60 L/min to be dispersed into spherical droplets with a uniform particle size of 0.5 mm to 0.6 mm.

### Example 4

This example provides a spherical composite phenolic resin and a preparation method therefor, which is different from Example 1 only in that, in step (3), the radial dimension of the discharge hole is 0.5 mm, the spacing between adjacent discharge holes is 2 mm, and the dispersed phase obtained in (1) is pumped into a resin granulator at a flow rate of 65 L/min to be dispersed into spherical droplets with a uniform particle size of 0.6 mm to 0.8 mm.

### Example 5

This example provides a spherical composite phenolic resin and a preparation method therefor, which is different from Example 1 only in that, in step (3), the radial dimension of the discharge hole is 0.5 mm, the spacing between adjacent discharge holes is 2 mm, and the dispersed phase obtained in (1) is pumped into a resin granulator at a flow rate of 70 L/min to be dispersed into spherical droplets with a uniform particle size of 0.8 mm to 1.0 mm.

### Example 6

This example provides a spherical composite phenolic resin and a preparation method therefor, which is different from Example 1 only in that, in step (3), the radial dimension of the discharge hole is 0.8 mm, the spacing between adjacent discharge holes is 2 mm, and the dispersed phase obtained in (1) is pumped into a resin granulator at a flow rate of 75 L/min to be dispersed into spherical droplets with a uniform particle size of 1.0 mm to 1.2 mm.

### Example 7

This example provides a spherical composite phenolic resin and a preparation method therefor, the method comprises the following steps, and the schematic flow chart is shown in FIG. 1; wherein steps (3) to (4) are performed in the preparation device disclosed in patent document CN116282017A:
(1) 100 g of phenolic resin, 500 g of methanol solvent, 0.5 g of amino-modified carbon nanotubes, and 10 g of aniline were mixed, then heated to 40° C and stirred for 3 h to obtain a dispersed phase.
   The method for preparing amino-modified carbon nanotubes was as follows: 10g of carbon nanotubes were dissolved in 200g of methanol, stirred at room temperature for 5h, and low molecular weight cracking products adhering to the carbon nanotubes were washed away. Then 25g of sodium dodecyl sulfate and 15g of oxalic acid are ultrasonicated at 40°C for 2h together with the carbon nanotubes to fully disperse the carbon nanotubes. The reactant after ultrasonic treatment were dehydrated under reduced pressure for 2h, and then placed at 80°C for vacuum drying for 8h to obtain amino-modified carbon nanotubes.
(2) 2000 g of turbine oil, 0.5 g of polytetrafluoroethylene, and 0.5 g of sodium dodecyl sulfate were mixed and stirred evenly to obtain a dispersion medium A7, which was placed in a granulation kettle for standby use; 100 g of deionized water, 10 g of cellulose, and 1 g of sodium dodecyl sulfate were mixed to obtain a dispersion medium B7, which was placed in a high-pressure autoclave for standby use.
(3) a molding device equipped with an injection plate and an exciter at the outlet was used, wherein the radial dimension of the discharge hole was 0.3 mm and the spacing between adjacent discharge holes was 2 mm, the dispersed phase obtained in (1) was pumped into the molding device at a flow rate of 50 L/min, and the dispersed phase was dispersed into spherical droplets with a uniform particle size of 0.1 to 0.3 mm at 50°C.
(4) the dispersion medium A7 was heated to 100°C, the spherical droplets obtained in (3) were sprayed into a granulation kettle filled with the dispersion medium A7, and the spherical droplets were allowed to move from top to bottom. During the falling process, the ethanol solvent in the droplets was evaporated, and the droplets were slowly cured under the action of the curing agent, tiny pores were left in the spheres, and finally a non-sticky state was achieved. The granulation kettle was then kept warm for 2 hours to obtain a spherical intermediate product 7, which is then centrifuged for solid-liquid separation.
(5) the spherical intermediate product 7 obtained in (4) was washed with a sodium stearate solution to remove any residual oil on the surface and inside the pores.
(6) 100 g of the washed spherical intermediate product 7 was added to the dispersion medium B7, the stirring rate was set to 400 r/min. The reaction was carried out at 0.1 MPa and 100° C for 3 h, and then filtered and dried to obtain the spherical composite phenolic resin.

### Example 8

This example provides a spherical composite phenolic resin and a preparation method therefor, comprising the following steps, and the schematic flow chart is shown in FIG. 1; wherein steps (3) to (4) are performed in the preparation device disclosed in patent document CN116282017A:
(1) 500 g of phenolic resin, 100 g of n-butanol solvent, 50 g of carbon nanotubes, and 1 g of paraformaldehyde were mixed, then heated to 70°C, and stirred for 0.5 h to obtain a dispersed phase.
(2) 100 g of liquid paraffin, 20 g of polytetrafluoroethylene, and 30 g of sodium dodecyl sulfate were mixed and stirred evenly to obtain a dispersion medium A8, which was placed in a granulation kettle for standby use; 3000 g of deionized water, 1 g of gelatin, and 50 g of sodium dodecyl sulfate were mixed to obtain a dispersion medium B8, which was placed in an autoclave for standby use.
(3) a molding device equipped with an injection plate and an exciter at the outlet was used, wherein the radial dimension of the discharge hole was 0.3 mm and the spacing between adjacent discharge holes was 2 mm, the dispersed phase obtained in (1) was pumped into the molding device at a flow rate of 50 L/min, and the dispersed phase was dispersed into spherical droplets with a uniform particle size of 0.1 to 0.3 mm at 90°C.
(4) the dispersion medium A8 was heated to 150°C, the spherical droplets obtained in (3) were sprayed into a granulation kettle filled with the dispersion medium A8, and the spherical droplets were allowed to move from top to bottom. During the falling process, the ethanol solvent in the droplets was evaporated, and the droplets were slowly cured under the action of the curing agent, tiny pores were left in the spheres, and finally a non-sticky state was achieved. The granulation kettle was then kept warm for 2 hours to obtain a spherical intermediate product 8, which is then centrifuged for solid-liquid separation.
(5) the spherical intermediate product 8 obtained in (4) was washed with a sodium stearate solution to remove any residual oil on the surface and inside the pores.
(6) 500 g of the washed spherical intermediate product 8 was added to the dispersion medium B8, the stirring rate was set to 500 r/min. The reaction was carried out at 0.5 MPa and 150° C for 3 h, and then filtered and dried to obtain the spherical composite phenolic resin.

### Example 9

This example provides a spherical composite phenolic resin and a preparation method therefor, which is different from Example 1 only in that, in step (3), the dispersed phase is dispersed at 70°C; in step (6), the stirring rate is 400 r/min and the reaction temperature is 110°C.

### Example 10

This example provides a spherical composite phenolic resin and a preparation method thereof, which is different from Example 1 only in that, in step (4), the dispersion medium A10 is heated to 130°C.; in step (6), the stirring rate is 800 r/min and the reaction temperature is 130°C.

### Comparative Example 1

This example provides a composite phenolic resin and a preparation method therefor. Compared with Example 1, the only difference is that no ethanol solvent is added in step (1).

As a result, the carbon nanotubes cannot be dispersed, and the phenolic resin is directly cured under the action of the curing agent, and the subsequent steps cannot be carried out.

### Comparative Example 2

This comparative example provides a composite phenolic resin and a preparation method therefor. Compared with Example 1, the only difference is that: in step (2), no dispersion medium B12 is prepared; at the end of step (4), no solid-liquid separation is performed; all materials in the granulation kettle are directly poured into the autoclave; the stirring rate is set to 500 r/min; the reaction is carried out at 0.3 MPa and 120°C for 5 h; the resin is then centrifuged for solid-liquid separation, washed with sodium stearate solution, and dried.

### Comparative Example 3

This comparative example provides a composite phenolic resin and a preparation method therefor. Compared with Example 1, the only difference is that in step (6), no stirring is performed.

### Test Example 1

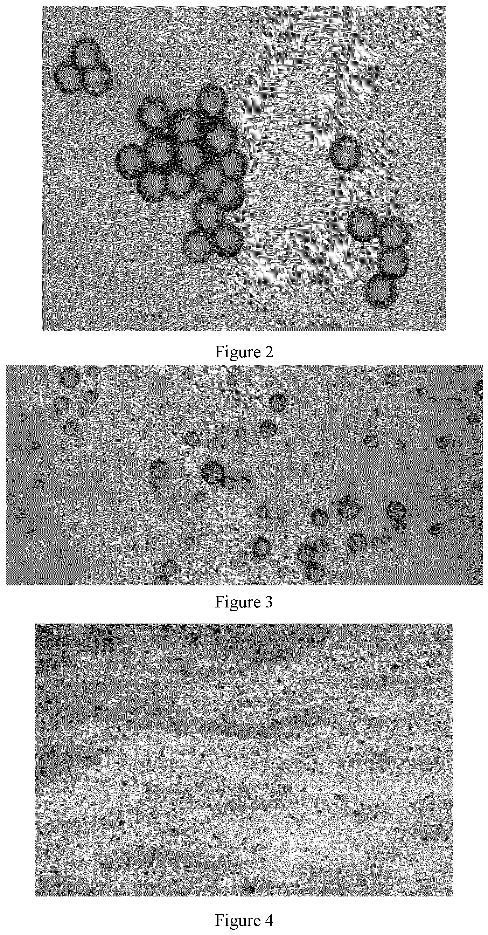

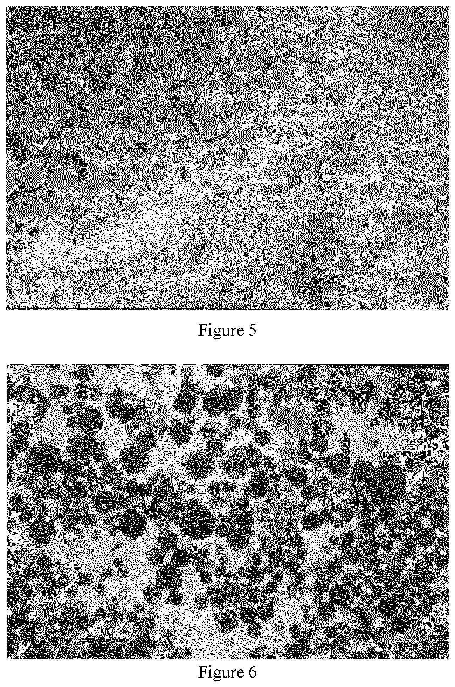

The final products obtained in the examples and comparative examples were observed under an optical microscope, as shown in FIG. 2 to FIG. 5. FIG. 2 is a photograph of the final product obtained in Example 1 magnified 300 times under a microscope, FIG. 3 is a photograph of the final product obtained in Example 7 magnified 200 times under a microscope, FIG. 4 is a photograph of the final product obtained in Example 1 magnified 200 times under a scanning electron microscope, FIG. 5 is a photograph of the final product obtained in Example 7 magnified 200 times under a scanning electron microscope and FIG. 6 is a photograph of the final product obtained in Example 8 magnified 100 times under a microscope. The images of the final products in the remaining examples are similar to the images given, and are not given one by one here. It can be seen from the images that the products prepared in the examples of the present application are spherical in uniform size and regular in shape, and can be used in environments with more stringent uniformity requirements.

### Test Example 2

The intermediate products and composite phenolic resins obtained in the examples and comparative examples were tested for their particle size range and particle size uniformity. The results are shown in Table 1.

**Table 1**

| | Particle size of the intermediate product | Particle size of the Composite phenolic resin | Uniformity of particle size of composite phenolic resin |
|---|---|---|---|
| Example 1 | 0.1-0.3mm | 20-50µm | 1.07 |
| Example 2 | 0.3-0.5mm | 30-70µm | 1.09 |
| Example 3 | 0.5-0.6mm | 50-80µm | 1.10 |
| Example 4 | 0.6-0.8mm | 80-150µm | 1.12 |
| Example 5 | 0.8-1.0mm | 150-300µm | 1.13 |
| Example 6 | 1.0-1.2mm | 300-500µm | 1.15 |
| Example 7 | 0.1-0.3mm | 30-80µm | 1.25 |
| Example 8 | 0.1-0.3mm | 50-300µm | 1.28 |
| Example 9 | 0.1-0.3 mm | 30-70µm | 1.12 |
| Example 10 | 0.1-0.3 mm | 5-30µm | 1.15 |
| Comparative Example 1 | - | - | - |
| Comparative Example 2 | 0.1-0.3mm | 80-240µm | 1.85 |
| Comparative Example 3 | 0.1-0.3mm | 80-300µm | 2.00 |

It can be seen from Table 1 that compared with the product obtained in the comparative examples, the uniformity of the product obtained in the examples is significantly reduced. It can also be seen from Examples 1 to 6 that the particle size of the intermediate product and the final product can be effectively regulated by the size of the discharge hole and the dispersed phase flow rate, and the operation is convenient. The suboptimal Examples 7 and 8 do not use the preferred operating parameters, and the obtained product uniformity is greater than that in other embodiments, but still much less than that in the comparative example. Using the preparation method of the present invention, a spherical composite phenolic resin with uniform particle size can be obtained, which makes its overall performance stable and more advantageous for practical application.

Obviously, the above examples are merely examples made for clear description, rather limiting the implementations. For those of ordinary skill in the art, other different forms of variations or modifications can also be made on the basis of the above-mentioned description. All embodiments are not necessary to be and cannot be exhaustively listed herein. In addition, obvious variations or modifications derived therefrom all fall within the scope of protection of the present invention.

## Claims

1. A method for preparing a spherical composite phenolic resin, **characterized in that** the method comprises the following steps:
S1: mixing a phenolic resin, a solvent, a composite additive and a curing agent, dispersing, and obtaining a dispersed phase;
wherein, the composite additive comprises at least one of carbon nanotubes, modified carbon nanotubes, graphene and conductive carbon black;
S2: mixing an oil-based dispersion medium and a surfactant to obtain a dispersion medium A; mixing deionized water, a dispersant, and a surfactant to obtain a dispersion medium B;
S3: preparing the dispersed phase into spherical droplets,
wherein the uniformity of the spherical droplets is 1.1 or less;
S4: allowing the spherical droplets to enter the dispersion medium A for curing reaction to obtain a spherical intermediate product;
S5: adding the spherical intermediate product into the dispersion medium B, and
performing a curing reaction under stirring to obtain the spherical composite phenolic resin,
wherein the uniformity of the spherical composite phenolic resin is 1.3 or less.

2. The method according to claim 1, **characterized in that** in the dispersed phase, the mass ratio of phenolic resin, solvent, composite additive and curing agent is (100-500) : (100-500) : (0.5-50) : (1-10);
and/or, in the dispersion medium A, the mass ratio of the oil-based dispersion medium to the surfactant is (100-2000) : (1-50);
and/or, in the dispersion medium B, the mass ratio of deionized water, dispersant, and surfactant is (100-3000) : (1-10) : (1-50);
and/or, in step S5, the mass ratio of the added spherical intermediate product to the deionized water, dispersant, and surfactant in the dispersion medium B is (100-500) : (100-3000) : (1-10) : (1-50);
and/or, the uniformity of the spherical composite phenolic resin is 1.2 or less.

3. The method according to claim 1 or 2, **characterized in that** in the step S1, the temperature of the dispersing is 40°C to 70°C and the time of the dispersing is 0.5h to 3h;
and/or, step S3 comprises feeding the dispersed phase into a molding device at a flow rate of 0.1 L/min to 5000 L/min at a temperature of 50°C to 90°C to shape a spherical droplet; an injection plate is installed at an outlet of the molding device, and the injection plate is provided with evenly distributed discharge holes; preferably, feeding the dispersed phase into the molding device at a flow rate of 50 L/min to 100 L/min at a temperature of 50°C to 90°C to shape a spherical droplet.

4. The method according to claim 3, **characterized in that** the particle size of the spherical droplets is controlled by the flow rate of the dispersed phase and the size of the discharge hole.

5. The method according to any one of claims 1 to 4, **characterized in that** in step S4, the temperature of the curing reaction is 100°C to 150°C and the time of the curing reaction is 2h to 5h; preferably, the temperature of the curing reaction is 120°C to 130°C;
and/or, in step S5, the temperature of the curing reaction is 100°C to 150°C, the pressure of the curing reaction is 0.1 MPa to 0.5 MPa, and the time of the curing reaction is 2h to 8h; preferably, the temperature of the curing reaction is 110°C to 130°C;
and/or, in step S5, the stirring rate is 400 r/min to 1600 r/min; preferably, the stirring rate is 400 r/min to 800 r/min.

6. The method according to any one of claims 1 to 5, **characterized in that** in step S4, the spherical droplets undergoing the curing reaction are in a non-stationary state;
and/or, between step S4 and step S5, further comprises a step of washing the spherical intermediate product, and the washing step comprises degreasing; preferably, the agent used for degreasing comprises sodium stearate.

7. The method according to any one of claims 1 to 6, **characterized in that** the solvent comprises at least one of methanol, ethanol and n-butanol;
and/or, the curing agent comprises at least one of aniline, urotropin and paraformaldehyde;
and/or, the oil-based dispersion medium comprises at least one of light normal liquid alkanes, turbine oil, dimethyl silicone oil, and liquid paraffin;
and/or, the surfactant comprises at least one of polytetrafluoroethylene, sodium dodecyl sulfonate, and sodium dodecyl sulfate;
and/or, the dispersant comprises at least one of polyvinyl alcohol, cellulose, gelatin, and carboxymethyl cellulose;
and/or, the carbon nanotube has a length of 1 µm to 15 µm and a tube diameter of 1 nm to 10 nm;
and/or, the modified carbon nanotube comprises at least one of amino-modified carbon nanotubes, carboxyl-modified carbon nanotubes, and hydroxyl-modified carbon nanotubes.

8. The spherical composite phenolic resin obtained by the method according to any one of claims 1 to 7.

9. The spherical composite phenolic resin according to claim 8, **characterized in that** the spherical composite phenolic resin has a particle size of 0.005 mm to 2 mm; preferably, the spherical composite phenolic resin has a particle size of 0.005 mm to 0.8 mm.

10. Use of the spherical composite phenolic resin according to claim 8 or 9 in battery negative electrode materials.
